# EUROPÄISCHE PATENTSCHRIFT

(11) **EP 1 069 018 B1**
(45) Veröffentlichungstag und Bekanntmachung des Hinweises auf die Patenterteilung: **18.05.2005**
(21) Anmeldenummer: 00114659.6
(22) Anmeldetag: 07.07.2000
(51) Int. Cl.: B61D 17/04, B61C 3/00

(54) **Lokomotivkastenaufbau mit Querschnittsversteifung**
Locomotive body structure with cross sectional stiffener
Structure de caisse d'une locomotive avec raidissement de la section transversale

(30) Priorität: 12.07.1999 DE 19932449
(43) Veröffentlichungstag der Anmeldung: 17.01.2001
(73) Patentinhaber: Siemens AG, 80506 München (DE)
(72) Erfinder: Schneider, Sieghard, Dipl.-Ing., 81245 München (DE)
(74) Vertreter: Zedlitz, Peter, Dipl.-Inf.

(56) Entgegenhaltungen:
- EP-A- 0 427 140
- DE-A- 2 707 573
- DE-A- 4 424 569
- DE-C- 191 153
- DE-U- 9 306 853
- DE-U- 9 415 771
- NL-C- 37 659

## Beschreibung

Lokomotiven, insbesondere elektrische Lokomotiven, haben einen kastenförmigen Aufbau und i.a. einen relativ langgestreckten (ca. 12 m) Maschinenraum, innerhalb dessen in der Regel keine Strukturelemente angebracht werden können, um den Bauraum für die Einbauten nicht zu durchteilen.

Die neuere Entwicklung bei E-Lokomotiven geht dahin, dass aufgrund immer noch höherer Anforderungen an den Wirkungsgrad der elektrischen Ausrüstung hocheffektive Transformatoren verwendet werden, die ein sehr hohes Gewicht aufweisen (13 t und mehr) . Hingegen werden insbesondere für Mehrsystemlokomotiven sehr hohe Anforderungen an den Kastenleichtbau gestellt (tragende Struktur 12 t und weniger) .

Die Biegeeigenfrequenz von Lokomotivkästen sinkt durch beide Entwicklungen - große Masse in Lokmitte und geringe Struktursteifigkeit - tendenziell ab und gerät leicht in den kritischen Bereich unter 10 Hz, in dem eine periodische Anregung dieser Schwingung durch die Gleislagestörungen und aus dem Rad-Schiene-Kontakt zu befürchten ist. auch Querschubschwingungen und Torsionsschwingungen sowie die Belastung des Lokkastens durch Luftkräfte (Zugbegegnung, Tunnelfahrt) verlangen nach möglichst großer Querschnittsteifigkeit.

Der durch die Begrenzungsprofile für Schienenfahrzeuge bedingte oben durch Schrägen eingezogene Querschnitt des Lokkastens neigt bei Biegebelastung zur (elastischen, aber wenig steifen) Deformation der Ursprungsform. Hierbei geben alle am Querschnitt beteiligten Strukturelemente (Dach, Dachschrägen, Seitenwände, Längsträger mit Querträgern im Untergestell) die Verformungen an die jeweils benachbarten Elemente weiter.

Ihre Steifigkeit sind sozusagen hintereinandergeschaltet. Die Gesamtsteifigkeit hängt maßgeblich vom schwächsten Element der Steifigkeitskette ab. Eine hohe Steifigkeit wird nur erreicht, wenn alle Strukturelemente ein möglichst einheitliches Steifigkeitsniveau gegen Biegung haben.

Bei der konventionellen Bauart sind Seitenwände an den Längsträgern befestigt und im Dachbereich über Dachspriegel, die das Dach tragen, miteinander verbunden. Wegen der großen Längsentfernung im langgestreckten Maschinenraum und der geringen Torsionssteifigkeit der Seitenwände wurden bei bisherigen Kastenkonstruktionen eine geringe Gesamtsteifigkeit und vereinzelt hohe Belastungen einzelner Strukturelemente (längs verlaufende Seitenwandspriegel) festgestellt.

Konventionelle Kastenkonstruktionen sind z.B. aus den Druckschriften DE-A-4424569 oder DE 9306853.0 U bekannt.

Der Erfindung stellt sich somit die Aufgabe, einen Lokomotivkastenaufbau anzugeben, der sich durch eine hohe Steifigkeit im Bereich der Kastenmitte auszeichnet, insbesondere gegen Biege- und Torsionsbelastung.

Die Lösung dieser Aufgabe erfolgt durch die im Anspruch 1 angegebenen Merkmale; die weiteren Ansprüche betreffen vorteilhafte Weiterentwicklungen der Erfindung.

Die Erfindung geht von der Erkenntnis aus, dass bei der konventionellen Bauweise die Kette der steifen Strukturelemente nicht geschlossen ist. So befindet sich üblicherweise ein Dachspriegel, der im Dachbereich wesentlich zur Querschnittssteifigkeit beiträgt, normalerweise in Lokmitte und ist über die wenig belastbaren Seitenwände mit den Längsträgern verbunden.

Zwar sind im Bereich der Lokmitte auch Querträger vorgesehen, sie dienen aber nicht in erster Linie der Querschnittsversteifung, sondern der Abstützung einer schweren Last wie beispielsweise eines Trafos, eines Dieselaggregates, eines Tanks ect.

Erfindungsgemäß wird nunmehr vorgeschlagen, diese Querträger zur Erhöhung der Gesamtsteifigkeit des Aufbaus einzusetzen, indem die Enden der Querträger über eine Verstrebungskonstruktion mit den jeweiligen Enden des Dachspriegels verbunden werden. Auf diese Weise wird durch eine Dreiecksverbindung der beiden Querträger mit dem mittleren Dachquerspriegel der Kreis der steifen Strukturelemente rund um den Querschnitt des Lokomotivkastens herum geschlossen, und der gewünschte steife Gesamtverbund wird erreicht.

Bei dem erfindungsgemäßen Aufbau ergibt sich zusätzlich der Vorteil, dass die Kraft aufgrund der Last in die Seitenwand eingeleitet wird und dass sich keine zusätzliche Belastung der Struktur durch Kraftumlenkung ergibt. Durch eine Verbindung der Verstrebungskonstruktion mit der Seitenwand kann die Durchbiegung der Seitenwand bei Belastung durch eine Druckwelle, beispielsweise bei Tunneleinfahrt und/oder Passieren von anderen Zügen, deutlich reduziert werden.

Der erfindungsgemäße Aufbau ist gleichermaßen für einzelne Lokomotiven als auch für Triebköpfe geeignet und kann mit allen Antriebssystemen, d.h. elektrischen Antrieben, Antrieb durch Verbrennungskraftmotor, Hybridantrieben etc., eingesetzt werden.

Eine Ausführungsform der Erfindung wird anhand der beigefügten Zeichnung erläutert. Es zeigt:
FIG 1 eine schematische Längsansicht des Lokomotivkastenaufbaus und
FIG 2 eine schematische Queransicht.

Der in den Figuren dargestellte Lokomotivkastenaufbau umfasst in konventioneller Weise zwei parallel angeordnete Längsträger 10, die an ihren Enden durch quer verlaufende Querträger (nicht dargestellt) miteinander verbunden sind und so einen Tragrahmen für den Lokomotivkastenaufbau bilden. An den Längsträgern sind Seitenwände 30 befestigt, die einen Dachaufbau 40 mit einem Dachspriegel aus zwei schräg angeordneten Teilen 42 und einem gerade angeordneten Teil 44 sowie eine Dachabdeckung 46 tragen. Optionell sind die Seitenwände 30 durch längslaufende Seitenwandspriegel (nicht dargestellt) verstärkt.

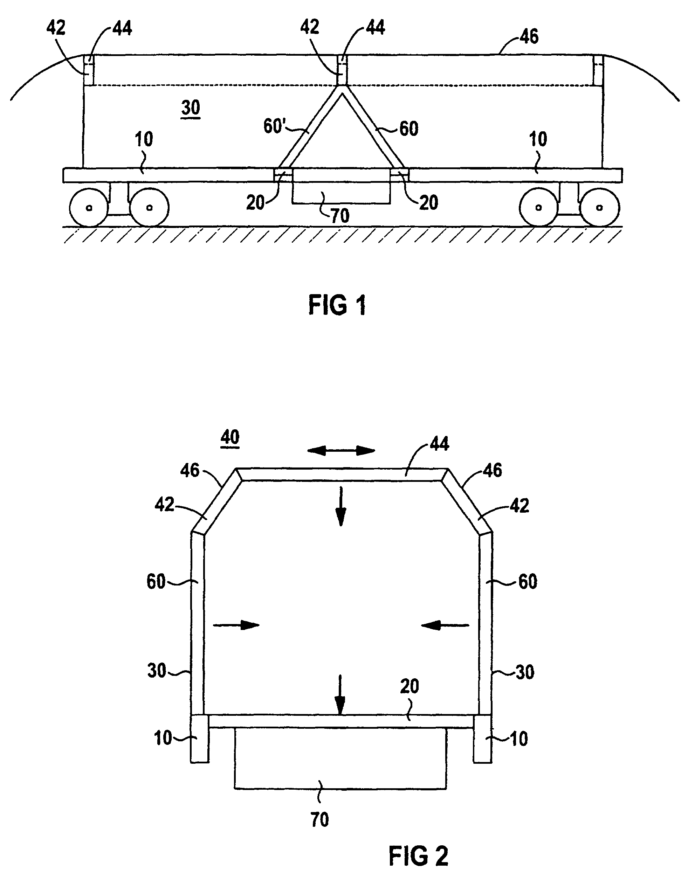

Im Bereich der Enden des Lokomotivkastenaufbaus sind weiterhin Schottwände 50 vorgesehen, die die Fahrstände vom eigentlichen Maschinenraum abtrennen. Diese Schottwände 50 zusammen mit den in den Endbereichen angeordneten Querträgern stellen eine relativ hohe Querversteifung im Bereich der Enden des Lokomotivkastenaufbaus sicher. Demgegenüber dürfen in der Regel im Maschinenraum zwischen den beiden Schottwänden keine zusätzlichen Querversteifungen eingebracht werden, da hier Einbauten vorgenommen werden müssen, d.h. Schaltschränke, Umrichter etc. An zwei quer verlaufenden Querträgern 20 ist beispielsweise ein Transformator 70 aufgehängt, der eine erhebliche Last darstellt. Diese Last kann zu Verformungen der Querträger, der Seitenwände und des Dachbereichs führen, wie durch die Pfeile in Fig. 2 dargestellt ist. Diese Verformungen können durch dynamische Belastungen noch verstärkt werden, die weiterhin zu einer Schwingung des Dachaufbaus 40 gegen den Unterbau führt, wie durch den Doppelpfeil in Fig. 2 angedeutet ist.

Erfindungsgemäß wird nunmehr vorgeschlagen, den üblicherweise im Bereich zwischen den Querträgern 20 angeordneten Dachspriegel mit den Querträgern 20 zu verbinden, d.h. auf jeder Seite wird ein Ende des abgeschrägten Teils 42 des Dachspriegels mit den entsprechenden Enden der Querträger 20 verbunden, und zwar über Schrägverstrebungen 60, 60'. Auf diese Weise ergibt sich eine umlaufende Kette steifer Strukturelemente, d.h. der Dachspriegel 42, 44, die Schrägverstrebungen 60, 60', die Querträger 20, die Schrägverstrebungen 60, 60' auf der gegenüberliegenden Seite sowie der andere schräg verlaufende Teil 42 des Dachspriegels.

Die Schrägverstrebungen können in üblicher Weise mit den anderen Strukturelementen verbunden sein, d.h. durch Verschrauben oder Verschweißen. Vorzugsweise sind die Querverstrebungen als langgestreckte Profile ausgebildet mit U-förmigem, T-förmigem, doppelt-T-förmigem Querschnitt oder in massiver Bauweise. Die Gesamtsteifigkeit wird erhöht, wenn die Schrägverstrebungen mit den Seitenwänden verschweißt sind, vorzugsweise über Schweißlaschen.

Durch die erfindungsgemäßen Maßnahmen wird mit einfachen Mitteln eine erhebliche Versteifung des Lokomotivkastenaufbaus erreicht. Dabei kann der mittige Dachspriegel beibehalten werden, so dass keine zusätzliche Dachspriegel erforderlich sind und ein relativ großer Abstand zwischen den Dachspriegeln beibehalten werden kann.

## Patentansprüche

1. Lokomotivkastenaufbau mit zwei parallelen Längsträgern (10),mit mindestens zwei Querträgern (20), die die Längsträger miteinander verbinden, von den Enden der Längsträger (10) beabstandet sind und zur Abstützung einer Last (70) dienen, und mit Seitenwänden (30) und einer Dachkonstruktion, wobei die Dachkonstruktion quer zu den Längsträgern (10) verlaufende Dachspriegel (42, 44) aufweist,
**dadurch gekennzeichnet, dass** ein Dachspriegel (42, 44) in Längsrichtung gesehen im Bereich zwischen zwei Querträgern (20) angeordnet ist, dass an jeder Seitenwand (30) das Ende des Dachspriegels (42, 44) unmittelbar mit je einem Ende von zwei Schrägverstrebungen verbunden ist, wobei die erste Schrägverstrebung (60) mit dem Ende des einen Querträgers (20) und die zweite Schrägverstrebung (60') mit dem Ende des anderen Querträgers (20) verbunden ist.

2. Lokomotivkastenaufbau nach Anspruch 1,
**dadurch gekennzeichnet, dass** die Querträger (20) im Bereich der Mitte der parallelen Längsträger (10) angeordnet sind.

3. Lokomotivkastenaufbau nach einem der Ansprüche 1 oder 2,
**dadurch gekennzeichnet, dass** jede Schrägverstrebung (60, 60') als U-Profil, T-Profil oder Doppel-T-Profil oder massiv ausgeführt ist.

4. Lokomotivkastenaufbau nach einem der Ansprüche 1 bis 3,
**dadurch gekennzeichnet, dass** jede Schrägverstrebung (60, 60') mit ihrer zugehörigen Seitenwand (30) verbunden ist.

5. Lokomotivkastenaufbau nach Anspruch 4,
**dadurch gekennzeichnet, dass** jede Schrägverstrebung (60, 60') mit der Seitenwand (30) verschweißt ist.

6. Lokomotivkastenaufbau nach Anspruch 5,
**dadurch gekennzeichnet, dass** die Verschweißung über an den Schrägverstrebungen (60, 60') ausgebildeten Schweißlaschen erfolgt ist.

## Claims

1. Locomotive body structure with two parallel longitudinal members (10), with at least two transverse members (20) which connect the longitudinal members to one another, are spaced apart from the ends of the longitudinal members (10) and are used to support a load (70), and with side walls (30) and a roof structure, wherein the roof structure has roof struts (42, 44) which extend transversely with respect to the longitudinal members (10), **characterized in that** a roof strut (42, 44) is arranged, viewed in the longitudinal direction, in the region between two transverse members (20), **in that** at each side wall (30) the end of the roof strut (42, 44) is connected directly to, in each case, one end of two oblique bracing members, wherein the first oblique bracing member (60) is connected to the end of one (20) of the transverse members, and the second oblique bracing member (60') is connected to the end of the other transverse member (20).

2. Locomotive body structure according to Claim 1, **characterized in that** the transverse members (20) are arranged in the region of the centre of the parallel longitudinal members (10).

3. Locomotive body structure according to one of Claims 1 or 2, **characterized in that** each oblique bracing member (60, 60') is embodied as a U section, T section or double T section, or is made solid.

4. Locomotive body structure according to one of Claims 1 to 3, **characterized in that** each oblique bracing member (60, 60') is connected to its associated side wall (30).

5. Locomotive body structure according to Claim 4, **characterized in that** each oblique bracing member (60, 60') is welded to the side wall (30).

6. Locomotive body structure according to Claim 5, **characterized in that** the welding has been carried out by means of welding clips which are formed on the oblique bracing members.

## Revendications

1. Structure de caisse de locomotive, comportant deux longerons (10) parallèles, comportant au moins deux traverses (20) qui relient entre eux les longerons, sont distantes des extrémités des longerons (10) et servent à soutenir une charge (70), et comportant des parois (30) latérales et une toiture, la toiture comprenant des armatures (42, 44) cintrées s'étendant transversalement aux longerons (10),
**caractérisée en ce qu'**une armature (42, 44) cintrée de toiture est disposée, considéré en direction longitudinale, dans la région comprise entre deux traverses (20), **en ce que**, sur chaque paroi (30) latérale, l'extrémité de l'armature (42, 44) cintrée de toiture est d irectement reliée à u ne e xtrémité respective de deux entretoises obliques, la première entretoise (60) oblique étant reliée à l'extrémité de l'une des traverses (20) et la deuxième entretoise (60') oblique étant reliée à l'extrémité de l'autre traverse (20).

2. Structure de caisse de locomotive suivant la revendication 1, **caractérisée en ce que** les traverses (20) sont disposées dans la région du milieu des longerons (10) parallèles.

3. Structure de caisse de locomotive suivant la revendication 1 ou 2, **caractérisée en ce que** chaque entretoise (60, 60') oblique est réalisée sous la forme de profilé en U, de profilé en T ou de profilé en I, ou est réalisée massive.

4. Structure de caisse de locomotive suivant l'une des revendications 1 à 3, **caractérisée en ce que** chaque entretbise (60, 60') oblique est reliée à sa paroi (30) latérale associée.

5. Structure de caisse de locomotive suivant la revendication 4, **caractérisée en ce que** chaque entretoise (60, 60') oblique est soudée à la paroi (30) latérale.

6. Structure de caisse de locomotive suivant la revendication 5, **caractérisée en ce que** le soudage s'effectue au moyen de pattes de soudage formées sur les entretoises (60, 60') obliques.
